# FASCICULE DE BREVET EUROPEEN

(11) **EP 1 134 846 B1**
(45) Date de publication et mention de la délivrance du brevet: **07.02.2007**
(21) Numéro de dépôt: 01400489.9
(22) Date de dépôt: 26.02.2001
(51) Int. Cl.: H01R 13/24

(54) **Connecteur électrique**
Elektrischer Verbinder
Electrical connector

(30) Priorité: 16.03.2000 FR 0003368
(43) Date de publication de la demande: 19.09.2001
(73) Titulaire: AMPHENOL-TUCHEL ELECTRONICS GmbH, 74080 Heilbronn (DE)
(72) Inventeur: Logerot, Bernard, 39380 Mont-sous-Vaudrey (FR)
(74) Mandataire: Dronne, Guy

(56) Documents cités:
- EP-A- 0 442 411
- GB-A- 663 467
- GB-A- 921 906
- US-A- 4 863 812
- US-A- 5 878 998

## Description

La présente invention a pour objet un connecteur électrique.

De façon plus précise, l'invention concerne un connecteur électrique utilisable notamment, mais non exclusivement, pour connecter un composant électrique amovible tel qu'une batterie à une carte de circuit imprimé.

Il existe de nombreux domaines dans lesquels on est amené à devoir relier électriquement de façon amovible un composant électrique, par exemple une batterie à une carte de circuit imprimé faisant partie d'un appareil. C'est notamment, mais non exclusivement, le cas des téléphones portatifs dans lesquels il est nécessaire de relier électriquement la batterie à la carte de circuit imprimé du téléphone portatif en autorisant de nombreuses manoeuvres de mise en place et d'enlèvement de cette batterie.

On comprend de plus que, dans le cas des téléphones portatifs, on cherche à miniaturiser le plus possible les différents composants et notamment la batterie et les dimensions des différentes pistes conductrices du circuit imprimé. En outre, il est bien sûr souhaitable que le connecteur lui-même ait des dimensions aussi réduites que possible.

On comprend en outre que, dans le cas d'une telle connexion électrique amovible, il est nécessaire que le connecteur qui comporte nécessairement des éléments de connexion élastiquement déformables puisse supporter un grand nombre de mises en place et d'extractions de la batterie.

Le document GB-A-663467 décrit un connecteur pour relier un composant électrique amovible à des contacts électriques, le connecteur comprenant:
une embase isolante comprenant une face inférieure et une face supérieure et au moins un évidement sensiblement cylindrique débouchant dans ladite face supérieure; et
au moins un élément de contact électrique élastique, chaque élément étant formé par un ruban conducteur électrique enroulé en spirale autour d'un axe, lesdites spires étant imbriquées et décalées selon la direction dudit axe et les faces du ruban étant parallèles audit axe, ladite spirale comportant une spire inférieure dont le bord inférieur est disposé dans un plan orthogonal audit axe sur au moins la moitié de sa périphérie, ladite spire inférieure comportant en outre une première extension s'écartant tangentiellement de ladite spirale, et une spire supérieure dont au moins le quart du bord supérieur est disposé dans un plan orthogonal audit axe, ledit élément de contact étant disposé dans ledit évidement de l'embase.

Un objet de la présente invention est de fournir un connecteur électrique dans lequel les éléments de connexion sont élastiquement déformables, qui soit de dimension réduite et qui autorise, sans altération du connecteur, un grand nombre de mises en place et d'extractions du composant électrique.

Pour atteindre ce but selon l'invention, le connecteur, pour relier un composant électrique amovible à des contacts électriques ménagés sur un panneau de circuit imprimé, est selon la revendication 1.

On comprend que, du fait que chaque élément de contact élastiquement déformable est réalisé par un ruban conducteur en forme de spirale, on a des conditions de déformation mécanique du contact électrique optimales puisque les contraintes de flexion sont appliquées selon la largeur du ruban conducteur constituant ces contacts. En outre, ce mode de réalisation des contacts permet de leur donner une certaine amplitude de déformation élastique sans augmenter de façon significative les dimensions totales de ce connecteur.

De plus, cette conformation du contact en forme de ressort spirale décalé axialement permet d'obtenir une pression de contact suffisante sans dépasser les limites mécaniques du matériau utilisé.

Selon un mode préféré de réalisation, l'embase isolante comporte en outre au moins une fente, chaque fente raccordant un évidement à un bord latéral de ladite embase et débouchant dans ladite face inférieure de l'embase, chaque évidement étant apte à recevoir la première extension dudit élément de contact électrique.

On comprend que, grâce à cette disposition, l'extension de chaque élément conducteur peut être directement soudée sur les contacts du panneau de la plaque de circuit imprimé et ses fentes réalisent une liaison mécanique au moins partielle entre les éléments de contact et l'embase isolante sans avoir à prévoir de disposition particulière et donc sans compliquer le montage de l'ensemble.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- la figure 1a est une vue de dessus d'un élément de contact électrique du connecteur ;
- la figure 1b est une vue de côté du contact électrique ;
- la figure 2a est une vue de dessus de l'embase isolante du connecteur ;
- la figure 2b est une vue de dessous de l'embase isolante du connecteur ;
- la figure 3a est une vue de côté de l'ensemble du connecteur électrique ;
- la figure 3b est une vue latérale du connecteur électrique complet ;
- la figure 3c est une vue de dessus du connecteur électrique complet ; et
- la figure 4 est une vue en perspective de l'ensemble du connecteur électrique selon un mode préféré de réalisation.

Comme on l'a déjà indiqué, le connecteur électrique est constitué essentiellement par une embase isolante dans laquelle sont montés deux contacts électriques élastiquement déformables.

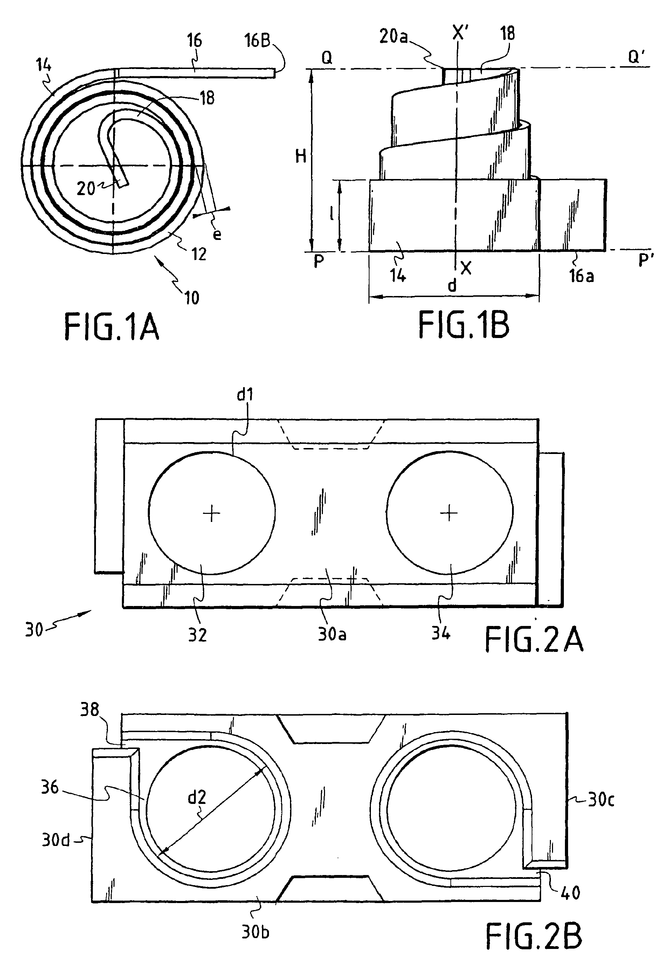

En se référant tout d'abord aux figures 1a et 1b, on va décrire un mode préféré de réalisation d'un contact électrique.

Le contact électrique 10 est réalisé à partir d'un ruban 12 en matériau conducteur qui est enroulé en spirale, les différentes spires étant décalées selon la direction de l'axe X, X' d'enroulement. Le ruban présente une largeur l constante et une épaisseur e également constante. La spire inférieure 14 comporte au moins la moitié et, de préférence, les trois quarts de sa longueur disposés dans un plan P, P' orthogonal à l'axe X, X'. La spire inférieure 14 est prolongée par une extension rectiligne 16 du ruban dont le bord inférieur 16a est également disposé dans le plan P, P'. Les autres spires sont décalées selon l'axe X, X' ainsi qu'on l'a déjà indiqué et sont imbriquées. La spire supérieure 18 comporte au moins un quart de sa longueur dans un plan Q, Q' orthogonal à l'axe X, X'. Cette spire supérieure 18 est prolongée par une deuxième extension du ruban 20 qui est repliée vers l'intérieur des spires comme le montre la figure la. Les bords supérieurs 18a et 20a de la spire supérieure 18 et de l'extension 20 sont disposés dans le plan Q, Q'.

On comprend qu'on obtient un système de ressort élastiquement déformable selon la direction de son axe X, X'. Le diamètre externe d de la spire inférieure 14 est de préférence compris entre 2,2 et 2,5 mm et la hauteur totale H du contact électrique est de préférence comprise entre 2,3 et 2,7 mm.

Le ruban 12 servant à réaliser le contact électrique peut être obtenu par tout moyen convenable et par exemple par découpe. Cependant, de préférence, ce ruban est obtenu en aplatissant un fil conducteur.

De préférence, le matériau utilisé pour réaliser le ruban est un cuprobéryllium ou encore un bronze. On comprend que, dans le cas où le ruban est obtenu par aplatissement d'un fil, les bords de ce ruban sont arrondis, ce qui est favorable comme on l'expliquera ultérieurement à la réalisation du contact par la spire supérieure et la spire inférieure.

En se référant maintenant aux figures 2a et 2b, on va décrire un mode préféré de réalisation de l'embase isolante correspondant au cas où le connecteur comporte deux contacts électriques. Celle-ci a une forme générale parallélépipédique rectangle et porte la référence 30. Celle-ci comporte une face supérieure 30a et une face inférieure 30b, ainsi que des parois latérales d'extrémité 30c et 30d. L'embase est percée de deux évidements sensiblement cylindriques 32 et 34 destinés à recevoir chacun un contact électrique 10. Chaque évidement comporte une partie supérieure de diamètre d1 et une partie inférieure débouchant dans la face inférieure 30b et de diamètre d2 supérieur à d1. Ces deux portions cylindriques sont bien sûr raccordées par un épaulement 36. Chaque évidement 32, 34 est prolongé par une fente 38, 40 qui débouche dans les parois latérales d'extrémité 30c et 30d et dans la face inférieure 30b de l'embase isolante. De préférence, le diamètre d2 de la partie inférieure des évidements est légèrement inférieur au diamètre d de la spire inférieure 14 du contact électrique lorsque celui-ci est au repos, de telle manière que cette spire soit maintenue dans l'évidement de l'embase par effet ressort.

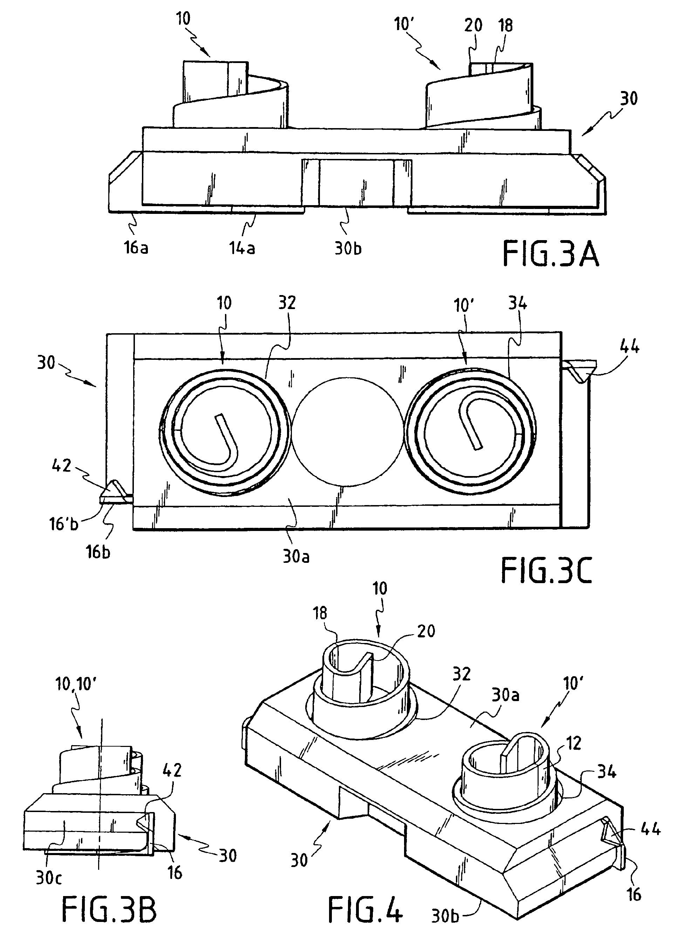

En se référant maintenant aux figures 3a à 3c, on va décrire l'ensemble du connecteur électrique. Celui-ci est donc constitué par l'embase isolante 30 et par deux contacts électriques élastiques 10 et 10'. Chaque contact électrique est engagé dans un des évidements 32 et 34 de telle manière que la spire inférieure 14 soit disposée dans la portion inférieure de l'évidement et l'extension 16 soit engagée dans la fente 38 ou 40. De plus, l'extrémité 16b de l'extension fait saillie hors des parois latérales de l'embase. De préférence, les parois latérales de l'embase comportent à proximité des fentes 38 et 40 des faces biseautées de fixation telles que 42 et 44 qui sont tournées vers la face supérieure de l'embase. La partie supérieure 16'b des extrémités des extensions est repliée sur ses portées 42 et 44 afin d'assurer une liaison mécanique entre les contacts électriques et l'embase 30. Comme le montre mieux la figure 3a, le bord inférieur 14a des spires inférieures des contacts électriques ainsi que le bord inférieur 16a des extensions 16 font saillie hors de la face inférieure 30b de l'embase. Lors du montage de ce connecteur sur une carte de circuit imprimé, ces bords inférieurs seront en contact avec la carte et le bord inférieur 16a des extensions est soudé sur les pistes électriques de la carte à circuit imprimé.

On comprend qu'après ce montage sur la carte à circuit imprimé, les spires supérieures 18 ainsi que les extensions 20 constituent la surface de contact avec les bornes de la batterie destinée à être reliée aux pistes du circuit imprimé.

On comprend également que, du fait que les faces principales du ruban constituant le ressort spiral sont parallèles à l'axe de ce ressort et donc à la direction d'application des efforts, la résistance mécanique du ressort est importante et peut donc supporter un nombre élevé de compressions alternées.

Il va de soi que pour certaines applications le connecteur pourrait comporter un nombre de contacts électriques différent de deux. Il pourrait en comporter un seul ou encore trois ou davantage. L'embase isolante comporterait alors autant d'évidements qu'il y a de contacts électriques.

Le ruban formant les éléments conducteurs peut être en laiton.

## Revendications

1. Connecteur pour relier un composant électrique amovible à des contacts électriques d'un panneau de circuit imprimé, le connecteur comprenant:
- une embase isolante (30) comprenant une face inférieure (30b) destinée à être en regard dudit circuit imprimé et une face supérieure (30a) et au moins un évidement (32, 34) sensiblement cylindrique débouchant dans lesdites faces inférieure et supérieure ; et
- au moins un élément de contact électrique élastique (10, 10'), chaque élément étant formé par un ruban (12) conducteur électrique enroulé en spirale autour d'un axe, lesdites spires étant imbriquées et décalées selon la direction dudit axe et les faces du ruban étant parallèles audit axe, ladite spirale comportant une spire inférieure (14) dont le bord inférieur est disposé dans un plan orthogonal audit axe sur au moins la moitié de sa périphérie, ladite spire inférieure (14) comportant en outre une première extension (16) s'écartant tangentiellement de ladite spirale, et une spire supérieure (18) dont au moins le quart du bord supérieur est disposé dans un plan orthogonal audit axe, ladite spire supérieure (18) étant prolongée par une deuxième extension (20) disposée à l'intérieur de ladite spirale, ledit élément de contact (10, 10') étant disposé dans ledit évidement (32, 34) de l'embase de telle manière que le bord inférieur de la spire inférieure (14) de chaque élément fasse saillie hors de la face inférieure de ladite embase (30).

2. Connecteur selon la revendication 1, **caractérisé en ce que** le diamètre des spires va en diminuant de la spire inférieure (14) à la spire supérieure (18).

3. Connecteur selon la revendication 2, **caractérisé en ce que** ladite embase isolante (30) comporte en outre au moins une fente (38, 40), chaque fente raccordant un évidement (32, 34) à un bord latéral de ladite embase (30) et débouchant dans ladite face inférieure (30b) de l'embase, chaque fente étant apte à recevoir la première extension (16) dudit contact électrique (10, 10').

4. Connecteur selon l'une quelconque des revendications 2 et 3, **caractérisé en ce que** chaque évidement (32, 34) comprend une portion inférieure de diamètre augmenté, ladite portion débouchant dans la face inférieure de l'embase pour recevoir la spire inférieure (14) d'un élément de contact (10, 10').

5. Connecteur selon la revendication 4, **caractérisé en ce que**, au repos, la spire inférieure de chaque élément conducteur a un diamètre légèrement supérieur au diamètre augmenté de la portion inférieure de l'évidement de l'embase.

6. Connecteur selon la revendication 3, **caractérisé en ce que** la première extension (16) de chaque élément conducteur, engagée dans une fente (38, 40) de l'embase, fait saillie hors de la paroi latérale de l'embase et **en ce que** ledit bord latéral comporte une portée de fixation tournée vers la face supérieure de l'embase, portée sur laquelle est repliée la partie supérieure terminale de la première extension d'un élément conducteur.

7. Connecteur selon l'une quelconque des revendications 1 à 6, **caractérisé en ce que** les bords supérieur et inférieur du ruban constituant un élément conducteur sont arrondis.

8. Connecteur selon l'une quelconque des revendications 1 à 7, **caractérisé en ce que** le diamètre extérieur de la spire inférieure d'un élément conducteur est compris entre 2,2 et 2,5 mm et **en ce que** la hauteur d'un élément conducteur selon la direction de son axe est comprise entre 2,3 et 2,7 mm.

9. Connecteur selon l'une quelconque des revendications 1 à 8, **caractérisé en ce que** ledit ruban formant les éléments conducteurs est choisi dans le groupe comprenant le cuprobéryllium, les bronzes et le laiton.

10. Connecteur selon l'une quelconque des revendications 1 à 9, **caractérisé en ce que** le ruban constituant un élément conducteur est un fil aplati.

11. Connecteur selon l'une quelconque des revendications 1 à 10, **caractérisé en ce que** ladite embase (30) comporte deux évidements (32, 34) et **en ce que** ledit connecteur comprend deux éléments de contact (10, 10') chaque élément de contact étant engagé dans un évidemment.

## Claims

1. Connector for connecting a removable electrical component to the electrical contacts of a printed circuit panel, where the connector comprises:
an insulating fixed connector (30) comprised of a lower surface (30b) intended to be placed facing the said printed circuit and an upper face (30a) and at least one effectively cylindrical recess (32,34) opening onto the said upper and lower surfaces; and
- at least one elastic electrical contact element (10,10') with each element being formed by a electrically conductive strip (12) wound in a spiral around an axis, with the said coils being placed inside each other and offset along the direction of the said axis, and with the faces of the strip being parallel to the said axis, with the said spiral including a lower coil (14) whose lower edge is arranged in a plane which is orthogonal to the said axis over at least half of its periphery, with the said lower coil (14) including, in addition, a first extension (16) which extends tangentially from the said spiral, and an upper coil (18) of whose upper edge at least a quarter is arranged in a plane which is orthogonal to the said axis, with the said upper coil (18) being extended by a second extension (20) arranged inside the said spiral, with the said contact element (10,10') being arranged in the said recess (32,34) of the fixed connector in such a way that the lower edge of the lower coil (14) of each element projects beyond the lower face of the said fixed connector (30).

2. Connector according to claim 1, **characterised by** the fact that the diameter of the coils decreases going from the lower coil (14) to the upper coil (18).

3. Connector according to claim 2, **characterised by** the fact that the said insulating fixed connector (30) includes, in addition, at least one slot (38,40), with each slot connecting a recess (32,34) to a lateral edge of the said fixed connector (30), and opening onto the said lower face (30b) of the fixed connector, with each slot being designed to receive the first extension (16) of the said electrical contact (10,10').

4. Connector according to any one of claims 2 and 3, **characterised by** the fact that each recess (32,34) includes a lower portion of increased diameter, with the said lower portion opening onto the lower face of the fixed connector to receive the lower coil (14) of a contact element (10,10').

5. Connector according to claim 4, **characterised by** the fact that at rest, the lower coil of each conductive element has a diameter which is slightly greater than the increased diameter of the lower portion of the recess of the fixed connector.

6. Connector according to claim 3, **characterised by** the fact that the first extension (16) of each conductive element, engaged in a slot (38, 40) of the fixed connector, projects beyond the lateral wall of the fixed connector and by the fact that the said lateral edge includes a fixing surface turned towards the upper face of the fixed connector, a surface onto which the upper terminal part of the first extension of a conductive element is folded over.

7. Connector according to any of claims 1 to 6 whatsoever, **characterised by** the fact that the upper and lower edges of the strip forming a conductive element are rounded.

8. Connector according to any of claims 1 to 7 whatsoever, **characterised by** the fact that the external diameter of the lower coil of a conductive element is between 2.2 and 2.5 mm and by the fact that the height of a conductive element along the direction of its axis is between 2.3 and 2.7 mm.

9. Connector according to any of claims 1 to 8 whatsoever, **characterised by** the fact that the strip forming the conductive elements is selected from a group which includes beryllium copper, bronzes and brass.

10. Connector according to any of claims 1 to 9 whatsoever, **characterised by** the fact that strip which forms a conductive element is a flattened wire.

11. Connector according to any of claims 1 to 10 whatsoever, **characterised by** the fact that the said fixed connector (30)includes two recesses (32,34) and by the fact that the said connector includes two contact elements (10,10') with each contact element being engaged in a recess.

## Patentansprüche

1. Verbinder zum Anschließen eines abnehmbaren elektrischen Bauteils an elektrischen Kontakten einer Leiterplatte, wobei der Verbinder umfasst:
- einen isolierenden Sockel (30) mit einer Unterseite (30b), die dazu bestimmt ist, gegenüber der gedruckten Schaltung angeordnet zu sein, und einer Oberseite (30a) und wenigstens einer im Wesentlichen zylindrischen Aussparung (32, 34), die in die Ober- und die Unterseite mündet; und
- wenigstens ein elastisches elektrisches Kontaktelement (10, 10'), wobei jedes Element durch ein Leitungsband (12) gebildet ist, das um eine Achse herum spiralförmig gewickelt ist, wobei die Windungen überlappend angeordnet und in Richtung der Achse versetzt sind und die Seiten des Bands zu dieser Achse parallel sind, wobei die Spirale eine untere Windung (14) aufweist, deren unterer Rand mit wenigstens der Hälfte seines Umfangs in einer Ebene orthogonal zu dieser Achse angeordnet ist, wobei die untere Windung (14) ferner eine erste Verlängerung (16) aufweist, die sich tangential von der Spirale entfernt, und eine obere Windung (18), deren oberer Rand wenigstens zu einem Viertel in einer Ebene orthogonal zu dieser Achse angeordnet ist, wobei die obere Windung (18) durch eine innen in der Spirale angeordnete zweite Verlängerung (20) verlängert ist, wobei das Kontaktelement (10, 10') in der Aussparung (32, 34) des Sockels derart angeordnet ist, dass der untere Rand der unteren Windung (14) eines jeden Elements aus der Unterseite des Sockels (30) vorsteht.

2. Verbinder nach Anspruch 1,
**dadurch gekennzeichnet, dass** der Durchmesser der Windungen von der unteren Windung (14) zur oberen Windung (18) allmählich abnimmt.

3. Verbinder nach Anspruch 2,
**dadurch gekennzeichnet, dass** der isolierende Sockel (30) zudem wenigstens einen Schlitz (38, 40) aufweist, wobei jeder Schlitz eine Aussparung (32, 34) mit einem Seitenrand des Sockels (30) verbindet und in die Unterseite (30b) des Sockels mündet, wobei jeder Schlitz die erste Verlängerung (16) des elektrischen Kontakts (10, 10') aufzunehmen vermag.

4. Verbinder nach einem der Ansprüche 2 oder 3,
**dadurch gekennzeichnet, dass** jede Aussparung (32, 34) ein unteres Stück mit vergrößertem Durchmesser aufweist, wobei dieses Stück in die Unterseite des Sockels mündet, um die untere Windung (14) eines Kontaktelements (10, 10') aufzunehmen.

5. Verbinder nach Anspruch 4,
**dadurch gekennzeichnet, dass** die untere Windung eines jeden Leitungselements im Ruhezustand einen Durchmesser hat, der geringfügig größer ist als der vergrößerte Durchmesser des unteren Stücks der Aussparung des Sockels.

6. Verbinder nach Anspruch 3,
**dadurch gekennzeichnet, dass** die in einen Schlitz (38, 40) des Sockels eingeführte erste Verlängerung (16) eines jeden Leitungselements aus der Seitenwand des Sockels vorsteht, und dass der Seitenrand eine Befestigungsauflagefläche aufweist, die zur Oberseite des Sockels gerichtet ist und auf die das obere Endteil der ersten Verlängerung eines Leitungselements umgebogen ist.

7. Verbinder nach einem der Ansprüche 1 bis 6,
**dadurch gekennzeichnet, dass** der obere und der untere Rand des ein Leitungselement bildenden Bands abgerundet sind.

8. Verbinder nach einem der Ansprüche 1 bis 7,
**dadurch gekennzeichnet, dass** der Außendurchmesser der unteren Windung eines Leitungselements zwischen 2,2 und 2,5 mm beträgt und die Höhe eines Leitungselements in Richtung seiner Achse zwischen 2,3 und 2,7 mm liegt.

9. Verbinder nach einem der Ansprüche 1 bis 8,
**dadurch gekennzeichnet, dass** das die Leitungselemente bildende Band aus der Kupferberyllium, Bronze und Messing umfassenden Gruppe gewählt ist.

10. Verbinder nach einem der Ansprüche 1 bis 9,
**dadurch gekennzeichnet, dass** das ein Leitungselement bildende Band ein Flachdraht ist.

11. Verbinder nach einem der Ansprüche 1 bis 10,
**dadurch gekennzeichnet, dass** der Sockel (30) zwei Aussparungen (32, 34) umfasst und der Verbinder zwei Kontaktelemente (10, 10') aufweist, wobei jedes Kontaktelement in eine Aussparung eingefügt ist.
